# EUROPEAN PATENT APPLICATION

(11) **EP 2 144 461 A2**
(43) Date of publication of application: **13.01.2010**
(21) Application number: 09164083.9
(22) Date of filing: 30.06.2009
(51) Int. Cl.: H04W 24/08

(54) **Insensitive area detecting method and apparatus for the same in radio communication system**

(30) Priority: 07.07.2008 JP 2008176476
(71) Applicant: NEC Corporation, Minato-ku Tokyo (JP)
(72) Inventor: Fujita, Takahiro, Tokyo (JP)
(74) Representative: Betten & Resch

(57) **Abstract**

Method of detecting an insensitive area in a radio communication system which includes a plurality of base stations (10,11) and a plurality of mobile terminals (12), a total reception power data is requested to a concerned one of the plurality of base stations (10,11) which is connected with a concerned one of the plurality of mobile terminals, when a signal indicating an insensitive state of the concerned mobile terminal (12) is received. Radio environment of an up link is determined from the concerned mobile terminal (12) to the concerned base station (10,11) based an the total reception power data from the concerned base station. An up link insensitive area is determined based on a position data of the mobile terminal (12) and the radio environment.

## Description

### Technical Field

The present invention relates to a radio communication system, and more specifically to a method and an apparatus for detecting an insensitive area of a radio service area.

### Background Art

Various kinds of systems have been proposed to detect an insensitive area in a radio service area by use of a mobile terminal. For example, Japanese Patent Application Publication (JP-P2005--210530A) as a first conventional example discloses an insensitive area detecting system in which a mobile terminal transmits a data of an area where reception is impossible to a server and the server recognizes the insensitive area based on the data

In a service area monitoring system disclosed Japanese Patent Application Publication (JP-P2004-274313A) as a second conventional example, a cellular phone located at a boundary of a service area transmits a radio quality data and a position data indicating a current position of the cellular phone. The service area monitoring apparatus monitors radio quality in the service area from the radio quality data. Moreover, it is defined in 3GPP (third Generation Partnership Project) that the radio quality data is transmitted when handover occurs or when the cellular phone is located at a boundary area with a service area. Therefore, it is described in the second conventional example that the radio quality data transmitted in accordance with this definition can also be used as the radio quality data for service area monitoring.

However, even when the radio reception power and reception quality of radio waves received from a base station by the mobile terminal are satisfactory, those of radio waves received from the mobile terminal by the base station are not necessarily satisfactory. In other words, there possibly exists a geographical area where the reception quality is asymmetrical in such a manner that the reception quality of a down link is excellent but the reception quality of an up link is not excellent. A map in which an actual insensitive area is reflected cannot be produced in an insensitive area detecting method that only the down link is considered.

### Summary of the Invention

Therefore, it is an object of the present invention to provide an apparatus and method for detecting an insensitive area, in which insensitive area detection can be carried out by reflecting radio environment of an up link in addition to a down link.

In an aspect of the present invention, a method of detecting an insensitive area in a radio communication system which comprises a plurality of base stations and a plurality of mobile terminals, is achieved by requesting a total reception power data to a concerned one of the plurality of base stations which is connected with a concerned one of the plurality of mobile terminals, when a signal indicating an insensitive state of the concerned mobile terminal is received; by determining radio environment of an up link from the concerned mobile terminal to the concerned base station based on the total reception power data from the concerned base station; and by determining an up link insensitive area based on a position data of the mobile terminal and the radio environment.

In another aspect of the present invention, an insensitive area detecting apparatus in a radio communication system which comprises a plurality of base stations and a plurality of mobile terminals, is provided. The apparatus includes a requesting section configured to request a total reception power data to a concerned one of the plurality of base stations which is connected with a concerned one of the plurality of mobile terminals, when a signal indicating an insensitive state of the concerned mobile terminal is received; a radio environment determining section configured to determine radio environment of an up link from the concerned mobile terminal to the concerned base station based on the total reception power data from the concerned base station; and an insensitive area determining section configured to determine an up link insensitive area based on a position data of the mobile terminal and the radio environment.

The present invention can detect an insensitive area while reflecting radio environment of the up link.

### Brief Description of the Drawings

The above and other objects, advantages and features of the present invention will be more apparent from the following description of certain exemplary embodiments taken in conjunction with the accompanying drawings, in which:
FIG. 1 is a configuration diagram showing a radio communication system including an insensitive area detection apparatus according to a first exemplary embodiment of the present invention;
FIG. 2 is a block diagram showing a schematic functional configuration of an up/down link insensitive area detection section in the insensitive area detection apparatus according to the present exemplary embodiment,;
FIG. 3 is a sequence diagram showing an operation related to insensitive area detection in the radio communication system shown in FIG. 1; and
FIG. 4 is a flow chart showing an insensitive area detecting method according to one example of the present invention.

### Exemplary embodiments

Hereinafter, a radio communication system of the present invention will be described with reference to the attached drawings.

First, there are two reasons that an insensitive area is detected with respect to an up link. The first reason is in that a mobile terminal gradually moves from a radio base station toward a service area end. At this time, since intensity of radio waves received by the mobile terminal decreases, the mobile terminal increases its own transmission power so that radio waves have the transmission power sufficient to reach the base station. When the transmission power exceeds an upper limit value, the insensitive area is generated due to shortage of resources for the increase of transmission power. The second reason is in that the number of mobile terminals currently connected with a certain base station increases so that an amount of up link interference exceeds a predetermined level. At this time, the mobile terminal gradually increases the transmission power so that its own signal can be detected by the base station. Therefore, the transmission power exceeds the upper limit value. This results in shortage of resource for the transmission power, to generate the insensitive area. In the present exemplary embodiments, the insensitive area detection is performed for every reason.

### [First Exemplary Embodiment]

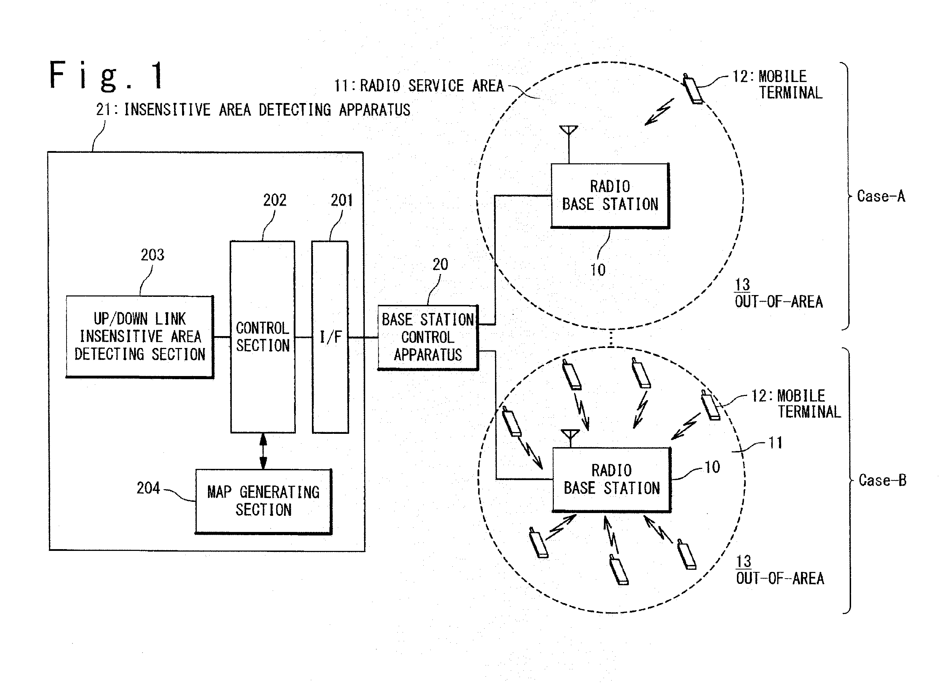

FIG. 1 is a block diagram showing a configuration of a radio communication system including an insensitive area detecting apparatus according to one exemplary embodiment of the present invention. Each of a plurality of radio base stations 10 forms radio service areas 11 and can make radio communication with one or a plurality of mobile terminals 12 located in this area. The plurality of radio base stations 10 are connected to a base station control apparatus 20, which is connected to an insensitive area detecting apparatus 21.

As well known, the mobile terminal has a function of adjusting the transmission power to a value within a predetermined upper limit in accordance with a distance from the radio base station 10 and radio environment; and a function of transmitting a message signal indicating an insensitive state to the base station control apparatus 20 when the transmission power has exceeded the upper limit value. Moreover, the mobile terminal is provided with a position data acquisition section, and a GPS (Global Positioning System) receiver is used as one example.

To avoid complexity in the drawing, the two radio base stations 10 are illustrated as states Case-A and Case-B. In case of the Case-A, the mobile terminal 12 moves toward an out-of area 13 outside the radio service area 11. In case of the Case-B, many mobile terminals in addition to the mobile terminal 12 communicate with the radio base station 10. As described above, in case of the Case-A, the mobile terminal 12 is moving away from the radio base station 10, so that reception power decreases and the mobile terminal 12 increases the transmission power accordingly. In case of the Case-B, the up link transmission interference from other mobile terminals is caused, so that the mobile terminals 12 increases the transmission power in accordance with the amount of this interference.

When the transmission power exceeds the predetermined upper limit value, the mobile terminal transmits to the base station control apparatus 20, a message indicating transmission power excess. Thus, in both of Case-A and Case-B, since the transmission power of the mobile terminal exceeds the upper limit value, the transmission power excess message is transmitted to the base station control apparatus 20. According to the present exemplary embodiment, the radio environment is monitored by using this message.

The insensitive area detecting apparatus 21 includes an interface 201 for connection with the base station control apparatus 20, and a control section 202 for performing a control operation of the entire apparatus. The control section 202 controls an up/down link insensitive area detecting section 203 to acquire position data of the insensitive area corresponding to the mobile terminal and data indicating a reason of the insensitive area. The control section 202 outputs these acquired data to a map generating section 204. The map generating section 204 determines the insensitive area and maps the position and the reason of this insensitive area on a map based on these data from the control section 202.

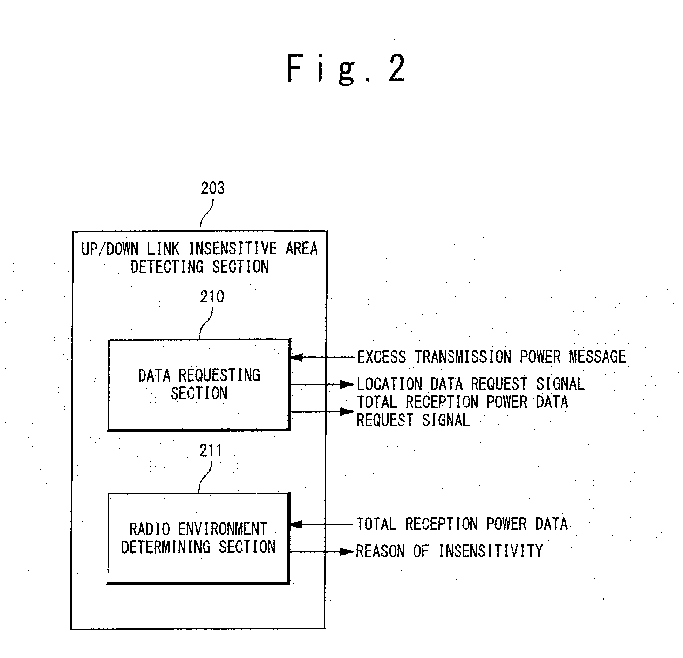

FIG. 2 is a block diagram schematically showing a configuration of the up/down Link insensitive area detecting section in the insensitive area detecting apparatus according to the present exemplary embodiment. The up/down link insensitive area detecting section 203 has an up link insensitive area detecting function and a down link insensitive area detecting function, and includes an data requesting section 210 and a radio environment determining section 211 for the up link insensitive area detection function. In response to reception of a transmission power excess message of a concerned mobile terminal 12 from the base station control apparatus 20, the data requesting section 210 transmits a position data request signal to the concerned mobile terminal 12 through the base station 10 in accordance with a predetermined procedure, and subsequently, transmits a total reception power data request signal to the radio base station 10 connected with the concerned mobile terminal 12 through the base station control apparatus 20. The total reception power is a total of up link reception powers from the mobile terminals 12 located in the radio service area 11 of this radio base station 10.

The radio environment determining section 211 receives the total reception power data from the radio base station 10 in response to the total reception power data request signal, and determines a reason of generation of the insensitive area based on the total reception power data and returns it to the control section 202.

The control section 202 outputs the position data which is received in response to the position data request signal, and the reason of generation of the insensitive area to the map generating section 204 and the map generating section 204 identifies the insensitive area based on these data and maps the insensitive area and the reason of generation of the insensitive area on a map.

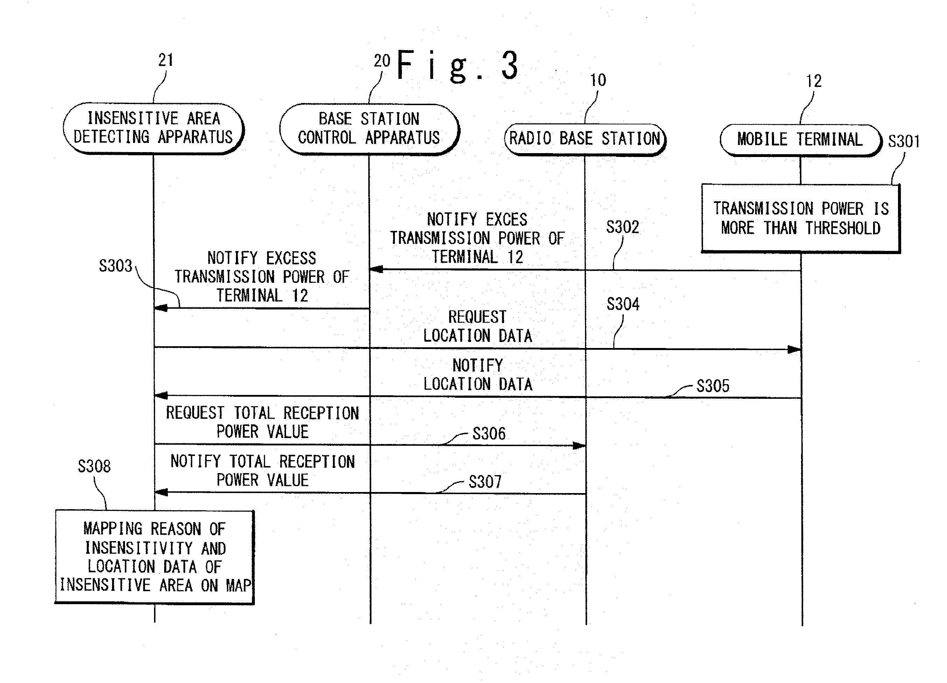

FIG. 3 is a sequence diagram showing an operation related to the insensitive area detection in the radio communication system shown in FIG. 1. First, it is supposed that the mobile terminal 12 is in the state of the Case-A or Case-B shown in FIG. 1 and that the transmission power of the mobile terminal 12 increases such that the transmission power exceeds a predetermined threshold value (the upper limit value here) (step S301). The mobile terminal 12 transmits a transmission power excess message indicating that the transmission power has exceeded the threshold value, to the base station control apparatus 20 through the radio base station 10 (step S302). In response to reception of the transmission power excess message from the mobile terminal 12, the base station control apparatus 20 transfers it to the insensitive area detecting apparatus 21 (step 303).

In response to reception of the transmission power excess message, the insensitive area detecting apparatus 21 issues a position data request to the mobile terminal 12 as a transmitter of the transmission power excess message (step S304). In response to the position data request, the mobile terminal 12 transmits the position data detected by its own GPS receiver to the insensitive area detecting apparatus 21 through the base station 10 and the control apparatus 20 (step S305).

In response to reception of the position data from the mobile terminal 12, the insensitive area detecting apparatus 21 issues a total reception power value request to the radio base station 10 connected with the mobile terminal 12 as the transmitter to request a summation of values of reception power from all the mobile terminals connected with the radio base station 10 (step S306). In response to the total reception power value request, the radio base station 10 transmits the total reception power data to the insensitive area detecting apparatus 21 through the control apparatus 20 (step S307).

The insensitive area detecting apparatus 21 receives the position data from the mobile terminal 12 and the total reception power data from the radio base station 10, estimates the radio environment of the up link as described later, and maps the insensitive area together with its radio environment on the map (step S308).

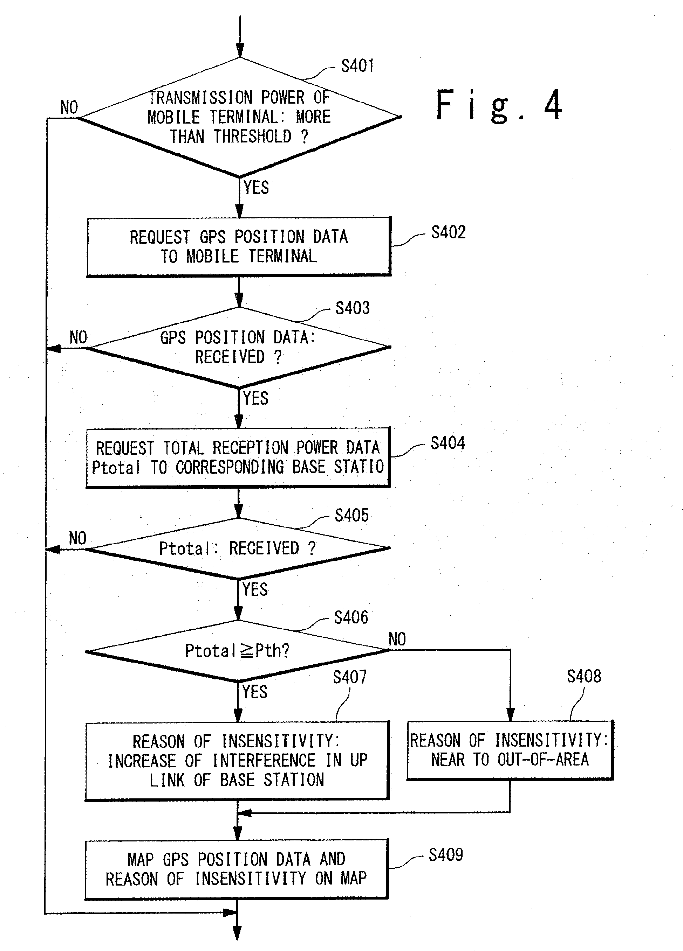

FIG. 4 is a flow chart showing an insensitive area detecting method according to one example of the present invention. The control section 202 of the insensitive area detecting apparatus 21 determines whether or not the transmission power excess message of the mobile terminal has been received from the base station control apparatus 20 (step S401). Upon the reception of the transmission power excess message from one of the mobile terminals 12 (YES in step S401), the data requesting section 210 of the up/down link insensitive area detecting section 203 requests GPS position data to the mobile terminal 12 (Step S402).

Upon reception of the GPS position data from the mobile terminal 12 within a predetermined period (YES in step S403), the data requesting section 210 requests the total reception power data Pₜₒₜₐₗ to the radio base station 10 connected with the mobile terminal 12 (step S404). Upon reception of the total reception power data Pₜₒₜₐₗ from the radio base station 10 (YES in step S405), the radio environment determining section 211 determines whether or not the total reception power data Pₜₒₜₐₗ is lower than a predetermined threshold value Pth (step S406). The threshold value Pth is a reference value preset for distinction between the Case-A and the Case-B in FIG. 1. For example, as in the Case-B, the total reception power at the radio base station 10 when interference by another mobile terminal is dominant can be used as the threshold value Pth. If the total reception power data Pₜₒₜₐₗ is equal to or larger than the threshold value Pth (YES in step S406), it is determined that the radio environment is in a state that the interference by another mobile terminal is dominant, and the radio environment determining section 211 determines that the reason of generation of the insensitive area is in the increase in the amount of up link interference of the radio base station (step S407).

On the other hand, if the total reception power data Pₜₒₜₐₗ has not yet reached the threshold value Pth (NO in step S406), it is determined that the radio environment is not in a state that the interference by another mobile terminal is dominant but the reason of generation of the insensitive area is in that the mobile terminal 12, is moving from the radio service area 11 toward the out-of-area 13 (step S908) .

Based on the reason of generation of the insensitive area and the GPS position data of the mobile terminal 12, the map generating section 205 specifying the insensitive area, and maps the insensitive area and its reason on the map (step S409).

It should be noted that the insensitive area detecting apparatus 21 can also be realized by executing the flow chart program shown in FIG. 4 on a program control processor such as a CPU.

The present exemplary embodiment makes it possible to find an up link related insensitive area which could not be found by only monitoring the down link. Moreover, the present exemplary embodiment makes it possible to specify the reason of generation of the up link related insensitive area while separating from each other the reason attributable to the amount of up link interference and the reason attributable to the position at the radio service area end, which enables insensitive area detection reflecting actual radio environment.

Using the up link insensitive area detection function according to the present exemplary embodiment and the aforementioned down link insensitive area detection function based on the reception power and the reception equality of the down link enables more excellent insensitive area detection than insensitive area detection considering the down link only.

### [Second Exemplary Embodiment]

The present invention is not limited to the aforementioned exemplary embodiment. For example, in the aforementioned exemplary embodiment, the transmission power excess message is transmitted to the base station control apparatus 20 when the transmission power of the mobile terminal has exceeded the upper limit value, but one or a plurality of threshold values within the upper limit value can be preset. Transmitting the aforementioned transmission power excess message when the transmission power has exceeded this threshold value makes it possible to change timing of transmitting the transmission power excess message. Providing the plurality of threshold values enables not only the insensitive area detection but also evaluation of a radio quality level of the up link.

The present invention is applicable to a mobile communication network such as 3G, WiMAX, LTE, or the like.

While the present invention has been particularly shown and described with reference to the exemplary embodiments thereof, the present invention is not limited to these exemplary embodiments. It will be understood by those of ordinary skill in the art that various changes in form and details may be made therein without departing from the spirit and scope of the present invention as defined by the claims.

## Claims

1. A method of detecting an insensitive area in a radio communication system which comprises a plurality of base stations and a plurality of mobile terminals, said method comprising:
requesting a total reception power data to a concerned one of said plurality of base stations which is connected with a concerned one of said plurality of mobile terminals, when a signal indicating an insensitive state of said concerned mobile terminal is received;
determining radio environment of an up link from said concerned mobile terminal to said concerned base station based on the total reception power data from said concerned base station; and
determining an up link insensitive area based on a position data of said mobile terminal and the radio environment.

2. The method according to claim 1, wherein said determining radio environment comprises:
determining the radio environment in which up link interference with one or more of said plurality of mobile terminals is dominant, when the total reception power data indicates to be higher than a predetermined threshold value.

3. The method according to claim 1 or 2, wherein said determining an insensitive area comprises:
determining the up link insensitive area in addition to a down link insensitive area which is determined based on a reception state of said concerned mobile terminal.

4. A computer-readable recording medium in which a computer-executable program code is stored to realize the method of detecting an insensitive area according to any of claims 1 to 3.

5. An insensitive area detecting apparatus in a radio communication system which comprises a plurality of base stations and a plurality of mobile terminals, comprising:
a requesting section configured to request a total reception power data to a concerned one of said plurality of base stations which is connected with a concerned one of said plurality of mobile terminals, when a signal indicating an insensitive state of said concerned mobile terminal is received;
a radio environment determining section configured to determine radio environment of an up link from said concerned mobile terminal to said concerned base station based on the total reception power data from said concerned base station; and
an insensitive area determining section configured to determine an up link insensitive area based on a position data of said mobile terminal and the radio environment.

6. The insensitive area detecting apparatus according to claim 5, wherein said radio environment determining section determines the radio environment in which up link interference with one or more of said plurality of mobile terminals is dominant, when the total reception power data indicates to be higher than a predetermined threshold value.

7. The insensitive area detecting apparatus according to claim 5 or 6, wherein said insensitive area determining section determines the up link insensitive area in addition to a down link insensitive area which is determined based on a reception state of said concerned mobile terminal.

8. The radio communication system comprising said insensitive area detecting apparatus according to any of claims 5 to 7.
